# EUROPÄISCHE PATENTSCHRIFT

(11) **EP 2 844 556 B1**
(45) Veröffentlichungstag und Bekanntmachung des Hinweises auf die Patenterteilung: **27.04.2016**
(21) Anmeldenummer: 13724566.8
(22) Anmeldetag: 16.05.2013
(51) Int. Cl.: B64C 31/024, B64D 27/24, B64D 27/02

(54) **HYBRIDFLUGZEUG**
HYBRID AIRPLANE
AVION HYBRIDE

(30) Priorität: 12.06.2012 DE 102012209807
(43) Veröffentlichungstag der Anmeldung: 11.03.2015
(73) Patentinhaber: Siemens Aktiengesellschaft, 80333 München (DE)
(72) Erfinder: ANTON, Frank, 91052 Erlangen (DE); GEDIGA, Swen, 91315 Höchstadt/Aisch (DE); WOLLENBERG, Johannes, 82166 Gräfelfing (DE)
(86) Internationale Anmeldenummer: PCT/EP2013/060170
(87) Internationale Veröffentlichungsnummer: WO 2013/186009

(56) Entgegenhaltungen:
- WO-A1-2010/020199
- DE-A1-102007 017 332
- DE-A1-102007 033 356
- US-A1- 2008 184 906
- US-A1- 2011 024 555

## Beschreibung

Die Erfindung betrifft ein Flugzeug sowie ein Verfahren zum Herstellen eines Flugzeugs. Das Flugzeug weist eine Verbrennungskraftmaschine auf, mittels welcher eine Antriebsleistung zum Antreiben eines Propellers des Flugzeugs erzeugbar ist. Unter einem Flugzeug ist insbesondere in motorbetriebenes Starrflügelflugzeug zu verstehen. Unter den Begriff Flugzeug fallen aber z.B. auch Drehflügler (Rotorflugzeug, Hubschrauber) und Motorsegler.

In heutigen Flugzeugen mit Propellerantrieb, wie etwa Leichtflugzeugen, ist eine Verbrennungskraftmaschine, beispielsweise ein Kolbenmotor oder ein Turbinenantrieb, entweder starr über eine Welle oder über ein Getriebe mit dem Propeller gekoppelt, um diesen anzutreiben. Aufgrund der mechanischen Kopplung zwischen Verbrennungskraftmaschine und Propeller ist der so gebildete Luftfahrzeugantrieb konzentriert am Flugzeug angebracht, meistens an einem Flügel oder an der Rumpfspitze. Diese Positionen haben sich als günstiger Abgleich erwiesen, um sowohl die Konstruktionskriterien betreffend die Position des Propellers einerseits als auch diejenigen der Position der Verbrennungskraftmaschine andererseits gegeneinander abzugleichen. Die mit dem Abgleich in Kauf genommenen Strömungsverluste werden dabei durch eine Verbrennungskraftmaschine mit entsprechend großer Leistung kompensiert. Dies führt allerdings zu einem entsprechend großen Kraftstoffverbrauch des Flugzeugs.

In der Druckschrift DE 10 2011 103 572 A1 ist ein eigenstartfähiges Segelflugzeug beschrieben, welches eine wiederaufladbare Gleichspannungsquelle und einen Elektroantrieb mit mindestens zwei Elektromotoren aufweist, um jeweils einen Propeller anzutreiben. Das Segelflugzeug kann auch einen Verbrennungsmotor mit einem daran gekoppelten elektrischen Generator zum Aufladen der Gleichspannungsquelle während des Fluges aufweisen. Der Verbrennungsmotor und der elektrische Generator bilden zusammen ein Notstromaggregat. Während des Fluges werden die Elektromotoren aus der wiederaufladbaren Gleichspannungsquelle mit Energie versorgt. Wenn ein vorbestimmter Grenzwert der Betriebsspannung der Gleichspannungsquelle unterschritten wird, muss die bezogene Leistung reduziert werden oder die Gleichspannungsquelle mittels des Notstromaggregats wieder aufgeladen werden.

In der Druckschrift US 2 462 201 A ist ein Flugzeug mit einem elektrisch angetriebenen Propeller und einem durch eine Turbine angetriebenen Generator beschrieben. Der Generator und der elektrische Motor für den Propeller sind unmittelbar über einen 3-phasigen Generatorbus gekoppelt. Der Generator und die Turbine sind nahe des Schwerpunkts des Flugzeugs angeordnet.

In der Druckschrift US 4 605 185 A ist ein Flugzeug mit elektrisch angetriebenen Propellern beschrieben, die ihre elektrische Energie von einem Generator beziehen, welcher durch einen Verbrennungsmotor angetrieben wird. Der Verbrennungsmotor ist so stark, dass das Flugzeug mit einer größeren Geschwindigkeit als gewöhnlich fliegen kann. Für den Fall, dass der Verbrennungsmotor ausfällt, ist eine Batterie für die Stromversorgung vorgesehen, welche einen Notfallbetrieb der elektrischen Motoren ermöglicht.

In der Druckschrift DE 10 2008 014 404 A1 ist ein Luftfahrzeug mit einem Hybrid-Antrieb beschrieben, wobei ein Brennstoffmotor einen Generator zur Stromerzeugung antreibt und der Strom einen als Primärantrieb fungierenden Elektromotor und/oder eine Pufferbatterie speist, wobei der Elektromotor auch mit Strom aus der Pufferbatterie gespeist werden kann. Der Elektromotor wird aus der Pufferbatterie gespeist, wenn der Brennstoffmotor ausfällt, wofür die Pufferbatterie derart ausgestaltet ist, dass stets ein sicheres Landen des Luftfahrzeugs gewährleistet ist, indem die Batterien so ausgelegt sind, dass eine Restflugzeit von 15 Minuten ermöglicht ist.

In der Druckschrift WO 2011/144690 A1 ist ein Hubschrauber beschrieben, bei dem Rotoren mit elektrischen Maschinen angetrieben werden, wobei die hierfür erforderliche elektrische Energie über eine Motor-Generatoreinheit erzeugt wird. Weiterhin kann die von den Generatoren erzeugte elektrische Energie an einen elektrischen Speicher abgegeben werden, damit die von diesem zwischengespeicherte Energie zur Notversorgung der elektrischen Maschinen eingesetzt werden kann, falls eine oder mehrere der Verbrennungskraftmaschinen der Motor-Generatoreinheiten ausfallen. Auch kann die zwischengespeicherte Energie dazu verwendet werden, Spitzen in der benötigten Leistung der elektrischen Maschinen zu bedienen.

In der Druckschrift DE 195 25 267 C2 ist ein Antrieb beschrieben, der als Energiequelle Wasserstoff verwendet, der nach Bedarf direkt oder durch eine Reaktion von Lithium, Natrium und anderen Grundelementen sowie Wasser erzeugt und dann mit Hilfe einer Antriebseinheit, wie einer Gasturbine oder einem Dieselmotor, oder einer Wärmekraftmaschine mit Generator in Antriebsenergie verwandelt wird.

In der Druckschrift WO 2011/144696 A1 ist ein Kippflügel-Flugzeug beschrieben, bei welchem die zum Antrieb notwendige Leistung für alle Propeller durch eine gemeinsame Motor- oder Turbineneinheit bereitgestellt wird und die Leistung dann über eine elektrische Kupplung je nach Missionsaufgabe optimiert auf die Propeller verteilt wird, die durch Elektromotoren angetrieben werden.

In der Druckschrift US 1,511,448 A ist ein Flugzeug mit elektrisch angetriebenem Propeller beschrieben, wobei der elektrische Antriebsmotor seine Energie aus einem Generator bezieht, der von einem Motor angetrieben wird. Der Motor kann in der Nase des Flugzeugs angeordnet sein, während die Propeller mit den Elektromotoren an den Flügeln angebracht sein können.

In der Druckschrift US 4,554,989 ist ein Helikopter beschrieben, dessen Rotor elektrisch angetrieben wird, wobei ein Generator die nötige elektrische Energie für den Antrieb des Rotors erzeugt. Der Generator wird durch eine Turbine angetrieben, deren Abluftschacht nach oben hin geöffnet ist.

In der Druckschrift DE 10 2010 021 026 A1 ist ein hybrides Antriebs- und Energiesystem für Fluggeräte beschrieben. Ein Energieerzeugungssystem liefert elektrische Energie über einen Inverter an einen ersten Elektromotor eines Hauptrotors eines Hubschraubers. Das Energieerzeugungssystem kann beispielsweise einen Wankelmotor und einen Generator umfassen. In einem Reiseflug des Hubschraubers, wenn der Leistungsbedarf für den Elektromotor des Hauptrotors nicht so groß ist wie beim Start, kann die so verfügbare zusätzliche Leistung des Energieversorgungssystems zum Aufladen der Batterie genutzt werden.

In der Druckschrift US 2011/0089290 A1 ist ein Flugzeug mit Strahltriebwerken beschrieben, die oberhalb von Flügelflächen angeordnet sind, um so eine Abstrahlung von Lärm der Triebwerke zum Boden hin zu verringern.

In der Druckschrift DE 27 20 957 A1 sind Motorsegelflugzeuge beschrieben, die Propellerantriebe aufweisen, die an unterschiedlichen Stellen angebracht sind, um so eine einwandfreie aerodynamische Gestaltung des jeweiligen Flugzeugs zu ermöglichen und eine praktische Schwerpunklage des Flugzeugs zu erzielen.

In der Druckschrift DE 32 45 011 A1 ist ein Segelflugzeug mit demontierbarem Hilfstriebwerk beschrieben. Bei dem Hilfstriebwerk kann es sich auch um ein mit elektrischen Batterien angetriebenem Elektromotor mit Propeller handeln.

In der US 2008/184906 A1, welche die Merkmale der Präampel des Anspruchs 1 offenbart, ist ein Hybridflugzeug beschrieben, welches einen parallelen Hybridantrieb oder einen seriellen Hybridantrieb aufweisen kann. Eine Energieerzeugungseinheit ist durch einen Verbrennungsmotor bereitgestellt, dessen Abgasrohr bei dem Hybridflugzeug zum Flugzeugheck gerichtet ist.

Eine Aufgabe der Erfindung besteht darin, beim Herstellen eines Flugzeugs mehr konstruktive Freiheitsgrade bei der Bestimmung geeigneter Positionen sowohl für den Propeller als auch die Verbrennungskraftmaschine zu schaffen.

Die Aufgabe wird durch ein Flugzeug gemäß Patentanspruch 1 gelöst. Vorteilhafte Weiterbildungen der Erfindung sind durch die Unteransprüche gegeben.

Durch die Erfindung wird eine sinnvolle Verteilung der einzelnen Komponenten des Luftfahrzeugantriebs im bzw. am Flugzeug ermöglicht. Hierzu wird die Verbrennungskraftmaschine nicht als mechanischer Antrieb für den Propeller, sondern als Bestandteil einer Energieerzeugungseinheit bereitgestellt, die außer der Verbrennungskraftmaschine noch einen mit dieser über eine Welle gekoppelten elektrischen Generator umfasst. Mit der Verbrennungskraftmaschine wird also zunächst elektrische Energie generiert. Der Propeller wird nun als Bestandteil einer Schuberzeugungseinheit bereitgestellt, die außer dem Propeller noch einen Elektromotor umfasst, der mit diesem über eine Welle gekoppelt ist.

Um den Betrieb des Elektromotors zu ermöglichen, werden die Schuberzeugungseinheit und die Energieerzeugungseinheit miteinander elektrisch gekoppelt. Hierzu wird der Generator mit dem Elektromotor mittels einer elektrischen Übertragungseinrichtung gekoppelt. Anders als eine Welle für eine mechanische Kopplung, kann diese elektrische Übertragungseinrichtung flexible Kabel umfassen, über welche elektrische Leistung vom Generator zum Elektromotor übertragen werden kann. Die relative Lage der Energieerzeugungseinheit und der Schuberzeugungseinheit zueinander kann somit frei gewählt werden. Es ergeben sich zusätzliche konstruktive Freiheitsgrade, die es ermöglichen, bei der Konstruktion des Flugzeugs die Position der Schuberzeugungseinheit unabhängig von der Position der Energieerzeugungseinheit festzulegen. Die Erfindung sieht entsprechend vor, zum Herstellen des Flugzeugs für die Energieerzeugungseinheit eine Position zu ermitteln, an welcher die Energieerzeugungseinheit im Flugzeug angeordnet werden kann. Die Position für die Schuberzeugungseinheit wird dabei unabhängig von der Position der Energieerzeugungseinheit ermittelt. Nach dem Anordnen im Flugzeug an der jeweils für sie ermittelten Position, werden die Generator- und die Schuberzeugungseinheit dann über die Übertragungseinrichtung elektrisch gekoppelt.

Insgesamt ist hierdurch in vorteilhafter Weise eine räumliche Verteilung der Antriebskomponenten im Flugzeug freier wählbar.

Das erfindungsgemäße Flugzeug weist entsprechend eine Schuberzeugungseinheit der genannten Art sowie eine Energieerzeugungseinheit der genannten Art auf. Des Weiteren weist das erfindungsgemäße Flugzeug die beschriebene elektrische Übertragungseinrichtung auf, die zum Übertragen von elektrischer Energie von der Energieerzeugungseinheit zu der Schuberzeugungseinheit ausgebildet ist. Bei dem erfindungsgemäßen Flugzeug beträgt nun ein Abstand zwischen der Schuberzeugungseinheit und der Energieerzeugungseinheit mindestens 0,5 m, insbesondere mehr als 1,0 m, bevorzugt mehr als 1,5 m. Hierdurch ist es möglich, die Schuberzeugungseinheit an einem aerodynamisch günstigen Ort am Flugzeugrumpf oder an dessen Flügeln zu platzieren und gleichzeitig die Energieerzeugungseinheit im Rumpf strömungsgeschützt und nach weiteren Konstruktionskriterien günstig anzuordnen.

Die mechanische Entkopplung der Schuberzeugungseinheit einerseits und der Energieerzeugungseinheit andererseits bringt des Weiteren den Vorteil mit sich, dass auch ein besonders wirtschaftlicher Betrieb der Verbrennungskraftmaschine ermöglicht ist. Hierzu sieht das erfindungsgemäße Flugzeug vor, dass eine maximal mögliche Leistungsabgabe der Verbrennungskraftmaschine kleiner als die bei einem Start des Flugzeugs benötigte Schubleistung (MTOP - Maximum Take-off Power - maximale Startleistung) ist. Mit anderen Worten kann das Flugzeug eine deutlich kleinere Verbrennungskraftmaschine aufweisen, als ein herkömmliches Flugzeug, bei welchem der Propeller unmittelbar über die Verbrennungskraftmaschine angetrieben wird, sodass diese auch die MTOP aufbringen können muss.

Ein verbrauchsoptimierter Betrieb der Verbrennungskraftmaschine liegt bei einer Leistungsabgabe der Verbrennungskraftmaschine in einem Bereich von 100% bis 130% der bestimmungsgemäßen Reiseleistung des Flugzeugs. Unter der Reiseleistung (MCP - Maximum Continuous Power - maximale, kontinuierlich erzeugbare Leistung) ist ein Leistungswert zu verstehen, welchen das Flugzeug für die Schuberzeugung während der Reise zwischen der Startphase und der Landephase erzeugen können muss. Die MCP liegt in der Regel zwischen 30% und 70% der MTOP. Bei einer Verbrennungskraftmaschine ist ein Betrieb bei maximalem Wirkungsgrad in der Regel nahe der maximalen Leistungsabgabe gegeben. Indem nun die maximale Leistungsangabe kleiner als die MTOP sein kann, kann der Betrieb bei maximalem Wirkungsgrad nahe der MCP gewählt wird. Durch die Wahl der maximal möglichen Leistungsabgabe im Bereich zwischen 100% bis 130% der MCP, also größer als 100%, ist es des Weiteren möglich, während des Flugs nebenher noch eine Batterie mittels der Verbrennungskraftmaschine aufzuladen. Eine solche Batterie kann dann dazu genutzt werden, die für das Aufbringen der MTOP benötigte zusätzliche Leistung bereitzustellen.

In diesem Zusammenhang sieht das erfindungsgemäße Flugzeug vor, dass zumindest eine weitere Energieversorgungseinrichtung zum Versorgen der Schuberzeugungseinrichtung mit zusätzlicher elektrischer Energie bereitgestellt ist, wobei die zumindest eine weitere Energieversorgungseinrichtung eine Batterie oder eine Brennstoffzelle umfasst. Die zumindest eine weitere Energieversorgungseinrichtung kann z.B. in einem Flügel des Flugzeugs angeordnet sein. Durch eine Batterie oder eine Brennstoffzelle kann die Energieerzeugungseinheit beim Start des Flugzeugs unterstützt werden, um die benötigte MTOP bereitzustellen. Hierdurch entstehen auch keine zusätzlichen Geräusche.

Bevorzugt wird für die Schuberzeugungseinheit eine Position ermittelt, durch welche zumindest eine, bevorzugt zumindest zwei, aus den folgenden Bedingungen im Flugbetrieb erfüllt wird.

Die erste Bedingung besagt, dass der Propeller frei angeströmt wird. Ein freies Anströmen ist dann gegeben, wenn sich in Flugzeuglängsrichtung vor dem Propeller kein weiteres Bauelement des Flugzeugs befindet, welches die Strömung der zum Propeller hin strömenden Luft signifikant beeinflusst.

Die zweite Bedingung besagt, dass ein vom Propeller erzeugter Luftstrom frei abströmt. Unter einem freien Abströmen versteht man, dass von der Schuberzeugungseinheit beschleunigte, abströmende Luft auf kein weiteres Bauteil des Flugzeugs trifft, welches den Luftstrom signifikant beeinträchtigt. Bei heutigen Flugzeugen trifft der Luftstrom in der Regel auf den Flugzeugrumpf (Propeller am Bug) oder auf einen Flügel, was den Auf- und Vortrieb im Vergleich zu einem frei abströmenden Luftstrom signifikant beeinträchtigt.

Durch die Verbesserung der Anströmung und/oder der Abströmung ergibt sich eine günstigere Aerodynamik, die z.B. den Bau des Flugzeugs mit verhältnismäßig kurzen Flügeln ermöglicht, was wiederum den Treibstoffverbrauch senkt. So ist entsprechend gemäß einer Ausführungsform des erfindungsgemäßen Flugzeugs vorgesehen, dass die Schuberzeugungseinheit zwischen Tragflächen des Flugzeugs und einem Leitwerk des Flugzeugs angeordnet ist. Diese Anordnung erfüllt sowohl die Bedingung des freien Anströmens als auch diejenige des freien Abströmens.

Die dritte Bedingung besagt, dass eine von der Schuberzeugungseinheit erzeugte Antriebskraft in einem vorbestimmten Bereich auf den Flugzeugrumpf übertragen wird. Im Gegensatz zu einem Flugzeug gemäß dem Stand der Technik kann die leichtbauendere Schuberzeugungseinheit aus Propeller und Elektromotor an sehr viel mehr unterschiedlichen Orten am Flugzeugrumpf oder an einem Flügel angebracht werden, ohne dass hierdurch die Statik des Flugzeugs überfordert wird. Somit kann auch die Anbindungsstelle der Schuberzeugungseinrichtung für die Schubübertragung in den Flugzeugrumpf günstiger gewählt werden. Bei einem Flugzeug gemäß dem Stand der Technik, bei welchem zusätzlich noch das Gewicht der Verbrennungskraftmaschine berücksichtigt werden muss, ist man dagegen gezwungen, die Position des Propellers an die Statik des Flugzeugs anzupassen.

Ähnlich wie im Falle der Positionswahl für die Schuberzeugungseinheit sieht die Erfindung bevorzugt vor, dass für die Energieerzeugungseinheit eine Position ermittelt wird, die zumindest eine, bevorzugt zumindest zwei, aus den folgenden Bedingungen für einen Flugbetrieb erfüllt.

Die erste Bedingung besagt, dass von der Energieerzeugungseinheit ausgehende Vibrationen auf den Flugzeugrumpf nur bis zu einem vorbestimmten Maß übertragen werden. Da die Ausrichtung der Verbrennungskraftmaschine und des Generators bezüglich der Schuberzeugungseinheit völlig frei gewählt werden kann, stehen nun weitaus mehr Freiheitsgrade zur Verfügung, um die Übertragung von Vibrationen in den Flugzeugrumpf zu vermeiden, beispielsweise durch Auswahl einer entsprechenden Lage der Energieerzeugungseinheit oder durch Lagern der Energieerzeugungseinheit auf einem vibrationsdämpfenden Material.

Hierzu ist es erfindungsgemäß vorgesehen, dass eine Rotationsachse der Welle der Energieerzeugungseinheit quer zu einer bestimmungsgemäßen Flugrichtung des Flugzeugs angeordnet ist. So lassen sich die von der Verbrennungskraftmaschine hauptsächlich quer zur Rotationsachse wirkenden Vibrationskräfte in Längsrichtung zum Flugzeugrumpf ausrichten. Die Längssteifigkeit des Flugzeugrumpfes ist in der Regel größer als die Quersteifigkeit. Aus diesem Grund wird dann nur ein kleinerer Anteil der Vibrationen auf den Flugzeugrumpf übertragen.

Die zweite Bedingung besagt, dass ein von der Energieerzeugungseinheit erzeugtes Geräusch zu einem vorbestimmten Anteil, z.B. 50% oder 70%, nach oben hin vom Flugzeug abgestrahlt wird. Auch diese Bedingung lässt sich nun sehr viel leichter erfüllen, indem die Lage der Energieerzeugungseinheit im Flugzeugrumpf entsprechend gewählt wird oder sogar eine Schallleiteinrichtung zum Abstrahlen eines von der Energieerzeugungseinheit erzeugten Schalls nach oben vom Flugzeug weg bereitgestellt wird. Eine solche Schallleiteinrichtung umfasst einen Kanal zum Leiten des Schalls nach oben hin.

Gemäß der dritten Bedingung balanciert das Gewicht der Energieerzeugungseinheit das Gewicht der Schuberzeugungseinheit zumindest teilweise aus. Das Ausbalancieren erfolgt hierbei bezüglich des Gesamtschwerpunkts des Flugzeugs. Entsprechend sieht eine Ausführungsform des erfindungsgemäßen Flugzeugs vor, dass ein Gesamtschwerpunkt des Flugzeugs zwischen einem Schwerpunkt der Energieerzeugungseinheit und einem Schwerpunkt der Schuberzeugungseinheit angeordnet ist. Das Ausbalancieren hat den Vorteil, dass das Flugzeug einen kürzeren Rumpf aufweisen kann. Bei Flugzeugen aus dem Stand der Technik mit einem kompakten Aufbau des Luftfahrzeugantriebs aus Propeller und Verbrennungskraftmaschine in der Bugspitze muss dagegen das Gewicht dieses Antriebs auf einer Seite des Gesamtschwerpunkt angeordnet werden und deshalb durch einen entsprechend verlängerten Rumpf ausbalanciert werden.

Um die von der Energieerzeugungseinheit erzeugte elektrische Energie zu der Schuberzeugungseinheit zu übertragen, ist bei dem erfindungsgemäßen Flugzeug die elektrische Übertragungseinrichtung bereitgestellt. Mit dieser wird der erwähnte Abstand überbrückt. In einer einfachen Ausführungsform kann vorgesehen sein, dass der vom Generator erzeugte Drehstrom unmittelbar an den Elektromotor übertragen wird und diesen antreibt. In diesem Fall ist dann die Drehzahl des Elektromotors von der Drehzahl des Generators abhängig.

Bevorzugt ist jedoch vorgesehen, dass die Übertragungseinrichtung einen Zwischenkreis umfasst, an welchen der Generator über einen Gleichrichter gekoppelt ist. Unter einem Zwischenkreis ist hier eine Anordnung aus elektrischen Leitelementen, z. B. Kabeln und/oder Stromschienen zu verstehen, über welche eine gleichgerichtete Spannung übertragen wird. Der Vorteil eines Zwischenkreises besteht darin, dass die Drehzahl des Elektromotors und die Drehzahl des Generators unabhängig voneinander sind.

Ein Umrichter zum Betreiben des Elektromotors ist dabei bevorzugt im Flugzeugrumpf angeordnet, also nicht unmittelbar am Elektromotor. Dies verbessert die Aerodynamik des Flugzeugs. Besteht dagegen Bedarf an Kühlleistung für den Umrichter, ist dieser zweckmäßigerweise außerhalb des Flugzeugrumpfes angeordnet. Der Umrichter kann auch vorteilhaft in den Elektromotor integriert werden.

Das Auftrennen des Luftfahrzeugantriebs in Schuberzeugungseinheit einerseits und Energieerzeugungseinheit andererseits ergibt den weiteren Vorteil, dass mit ein- und derselben Energieerzeugungseinheit auch eine weitere Schuberzeugungseinheit betrieben werden kann. Entsprechend sieht eine Ausführungsform des erfindungsgemäßen Flugzeugs vor, dass zumindest eine weitere Schuberzeugungseinheit bereitgestellt ist, die ebenfalls über die Übertragungseinrichtung elektrisch mit der Energieerzeugungseinheit gekoppelt ist. Anders als bei herkömmlichen Flugzeugen muss also bei dieser Ausführungsform des Flugzeugs nur eine Verbrennungskraftmaschine bereitgestellt sein. Dies vereinfacht das Auffinden einer Position für die Energieerzeugungseinheit, an welcher möglichst wenig Vibrationen auf den Flugzeugrumpf übertragen werden und/oder eine Schallemission nach unten hin möglichst gering ist. Mittels der einen Energieerzeugungseinheit können dann problemlos mehrere, nach aerodynamischen Gesichtspunkten optimal angeordnete Schuberzeugungseinheiten im Flugzeug / am Flugzeug betrieben werden. Wegen der in der Regel klein bauenden Elektromotoren ist es insbesondere auch möglich, mehrere kleine Propeller zu betreiben und für diese entsprechend günstige Positionen zu finden. Beispielsweise können 4 oder sogar 8 Propeller vorgesehen sein, die dann einen Schub erzeugen, der dann sehr viel gleichmäßiger verteilt sein kann als der Schub von nur zwei Propellern.

Bei der Realisierung eines erfindungsgemäßen Flugzeugs ist man im Bezug auf die Wahl des Propellers sehr flexibel. Bei dem Propeller kann es sich beispielsweise um einen freifahrenden Propeller oder einen Mantelpropeller handeln. Unter einem freifahrenden Propeller wird vorliegend verstanden, dass die Blattspitzen des Propellers, im Gegensatz zu denjenigen eines Mantelpropellers, nicht von einem weiteren Bauteil des Propellers umgeben sind.

Auch in der Wahl des Elektromotors für die Schuberzeugungseinheit ist man sehr frei. Im Prinzip ist jeder Typ von elektrischer Maschine nutzbar, also z.B. eine Asynchronmaschine, eine Synchronmaschine, ein Gleichstrommotor. Als besonders geeignet hat sich eine permanentmagneterregte Synchronmaschine erwiesen.

Die Schuberzeugungseinheit weist gemäß einer Ausführungsform des erfindungsgemäßen Flugzeugs auch ein Getriebe auf, über welches der Elektromotor mit dem Propeller gekoppelt ist. Hierdurch kann ein verhältnismäßig langsam drehender Propeller genutzt werden und dennoch eine günstige Drehzahl für die Bauform des Elektromotors gewählt werden. Genauso kann bei der Energieerzeugungseinheit die Verbrennungskraftmaschine über ein Getriebe mit dem elektrischen Generator gekoppelt sein.

Im Folgenden wird die Erfindung noch einmal genauer anhand eines konkreten Ausführungsbeispiels erläutert. Dazu zeigt:
- FIG 1: eine schematische Darstellung einer Flugzeugantriebseinrichtung einer bevorzugten Ausführungsform des erfindungsgemäßen Flugzeugs und
- FIG 2: eine schematische Darstellung einer Ausführungsform des erfindungsgemäßen Flugzeugs.

Bei dem im Folgenden erläuterten Beispiel stellen die beschriebenen Komponenten des Flugzeugs jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

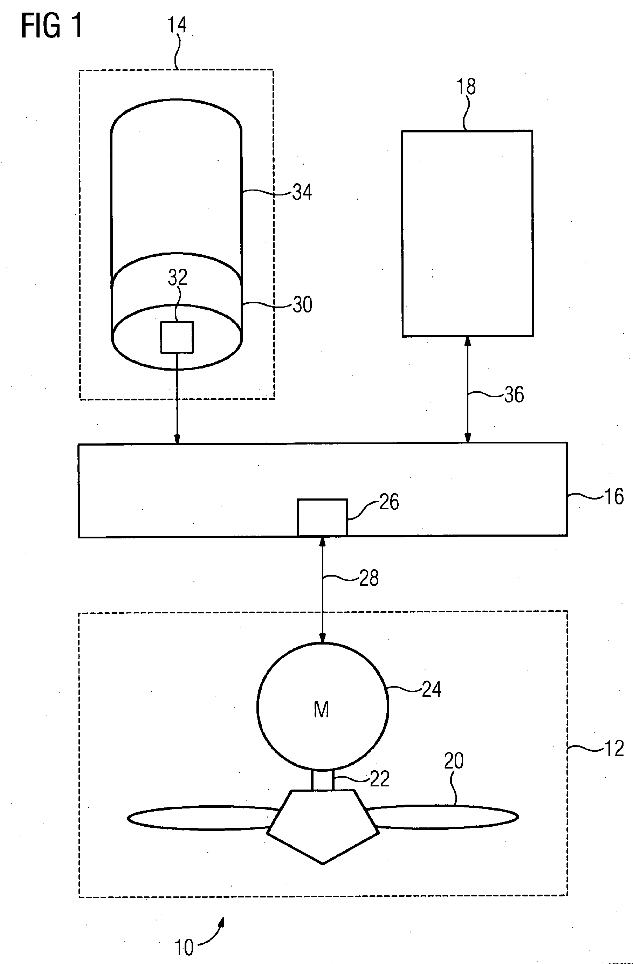

In FIG 1 ist ein Luftfahrzeugantrieb 10 gezeigt, der eine Schuberzeugungseinheit 12, eine Energieerzeugungseinheit 14, eine leistungsverteilende Elektronik, die eine elektrische Übertragungseinrichtung 16 darstellt, und eine Batterieanordnung 18 aufweist. Die Übertragungseinrichtung 16 kann einen Gleichspannungszwischenkreis sowie Gleich- und Wechselrichter zum Austauschen von elektrischer Energie mit dem Gleichspannungszwischenkreis umfassen. Der Luftfahrzeugantrieb 10 kann beispielsweise in einem Leichtflugzeug eingebaut sein. Die Schuberzeugungseinheit 12 weist einen Propeller 20 auf, der über eine Welle 22 mit einem Elektromotor 24 gekoppelt ist. Der Elektromotor 24 dreht die Welle 22 und treibt somit den Propeller 20 rotatorisch an. Der Elektromotor 24 kann zusätzlich über ein Getriebe mit dem Propeller 20 gekoppelt sein.

Eine Drehzahl und ein Drehmoment, welches der Elektromotor 24 dabei erzeugt, wird von einem Umrichter 26 in der an sich bekannten Weise eingestellt. Durch den Umrichter 26 wird in einem mehrphasigen Kabel 28 ein Drehstrom mit variabler Frequenz eingestellt. Der Umrichter 26 empfängt hierzu Schaltsignale von einem (nicht dargestellten) Steuergerät.

Der Umrichter wandelt eine elektrische Gleichspannung, die er von (nicht dargestellten) elektrischen Leitern des Zwischenkreises der Übertragungseinrichtung 16 abgreift in die Wechselspannung in dem Kabel 28 um. Bei der Gleichspannung des Zwischenkreises der Übertragungseinrichtung 16 handelt es sich um eine gleichgerichtete Spannung, die von der Energieerzeugungseinheit 14 erzeugt wird. Die Energieerzeugungseinheit 14 weist hierzu einen elektrischen Generator 30 auf, der über einen Gleichrichter 32 mit dem Zwischenkreis der Übertragungseinrichtung 16 gekoppelt ist. Der Generator 30 wird von einer Verbrennungskraftmaschine 34 angetrieben, beispielsweise einem Wankelmotor, einem Hubkolbenmotor oder einer Turbine.

Die Batterieanordnung 18 stellt eine weitere Energiequelle für den Elektromotor 24 dar. Die Batterieanordnung 18 kann eine oder mehrere Batterien mit jeweils einer oder mehreren Batteriezellen umfassen. Die von der Batterieanordnung 18 erzeugte Gleichspannung wird bei Bedarf ebenfalls über ein Kabel 36 in den Zwischenkreis der Übertragungseinrichtung 16 eingespeist. Dies kann auch über eine DC/DC-Wandler (DC - Gleichstrom) zur Anpassung der Batteriespannung an die Zwischenkreisspannung erfolgen. Durch eine (nicht dargestellte) entsprechende Schalteinrichtung ist es bei dem Luftfahrzeugantrieb 10 auch möglich, die Batterien der Batterieanordnung 18 mittels der Energieerzeugungseinheit 14 wieder aufzuladen. Anstelle der Batterieanordnung 18 oder zusätzlich hierzu kann beispielsweise auch ein Brennstoffzellensystem bereitgestellt sein.

Der Luftfahrzeugantrieb 10 kann noch weitere Schuberzeugungseinheiten wie die Schuberzeugungseinheit 12 aufweisen, die ebenfalls an den Zwischenkreis der Übertragungseinrichtung 16 angeschlossen sein können. Es können bei dem Luftfahrzeugantrieb 10 auch eine oder mehrere weitere Energieerzeugungseinheiten wie die Energieerzeugungseinheit 14 bereitgestellt sein, die ebenfalls an den Zwischenkreis der Übertragungseinrichtung 16 angeschlossen sein können.

Bei dem Luftfahrzeugantrieb 10 sind dessen Komponenten, insbesondere die Schuberzeugungseinheit 12 und gegebenenfalls die auch die weitere Schuberzeugungseinheit oder weiteren Schuberzeugungseinheiten einerseits und die Energieerzeugungseinheit 14 und gegebenenfalls die weitere Energieerzeugungseinheit oder weiteren Energieerzeugungseinheiten andererseits nicht konzentriert in einem Bereich des Flugzeugs, beispielsweise in der Bugspitze oder an einem Flügel angeordnet. Der Luftfahrzeugantrieb 10 ist stattdessen im Flugzeug verteilt angeordnet, wie es im Folgenden näher erläutert wird.

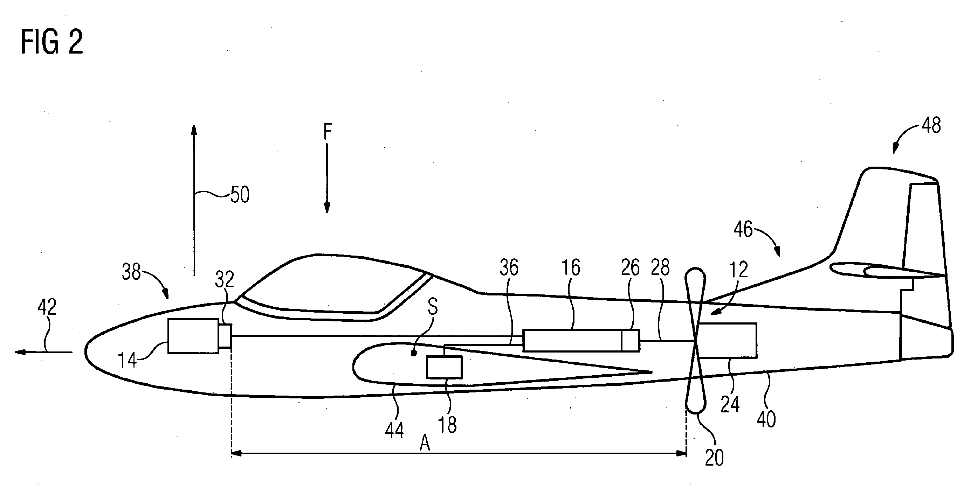

Wo genau die Antriebskomponenten des Luftfahrzeugantriebs 10 in einem vorgegebenen Flugzeugtyp anzuordnen sind, kann bei einem Entwurf und der Konstruktion des Flugzeugs anhand geeigneter Simulationen und Berechnungen ermittelt werden. Die Verteilung der einzelnen Antriebskomponenten könnten beispielsweise so aussehen, wie es anhand von FIG 2 erläutert ist. In FIG 2 ist der Luftfahrzeugantrieb 10 noch einem in einem Flugzeug F eingebaut dargestellt.

Die Energieerzeugungseinheit 14 kann in der Spitze 38 des Flugzeugrumpfes 14 angeordnet sein. Eine Kurbelwelle bzw. die Drehachse der Kurbelwelle muss dabei nicht in Flugrichtung 42 weisen. Die Batterieanordnung 18 kann beispielsweise aus zwei Teilbatterien bestehen, die jeweils in einer der Tragflächen 44 des Flugzeugs F angeordnet sein können. Der Umrichter 32 der Energieerzeugungseinheit 14 kann in einem Flugzeugrumpf 40 angeordnet sein. Das Steuergerät für den Umrichter 26 und den Umrichter 32 kann im Heck 46 angeordnet sein (in FIG 2 nicht dargestellt). Die Schuberzeugungseinheit 12 kann am Flugzeugrumpf 40 zwischen den Tragflächen 44 und einem Leitwerk 48 befestigt sein.

Ein weiterer Vorteil der Verteilung der Antriebskomponenten ergibt sich, wenn die Verbrennungskraftmaschine 34 so im Flugzeug F angeordnet wird, dass seine Schallabstrahlung nach oben (Richtung 50) gelenkt wird, und somit die Lärmbelastung am Boden, über den das Flugzeug F fliegt, reduziert wird.

Ein Abstand A zwischen der Schuberzeugungseinheit 12 und der Energieerzeugungseinheit 14 beträgt bei dem in FIG 2 gezeigten Bespiel mehr als 0,5 m, insbesondere mehr als 1,5 m. Ein Gesamtschwerpunkt S des Flugzeugs F, welcher den Massenschwerpunkt aller Komponenten des Flugzeugs F zusammen beschreibt, kann sich zwischen einem Massenschwerpunkt der Schuberzeugungseinheit 12 und einem Massenschwerpunkt der Energieerzeugungseinheit 14 befinden, um das Flugzeug auszubalancieren.

Durch Verteilung der einzelnen Antriebskomponenten (Verbrennungskraftmaschine 34, Generator 30, Batterien der Batterieanordnung 18, Steuerungs- und Regelungssystem (mit Leistungselektronik) der Übertragungseinrichtung 16, Elektromotor 24 und gegebenenfalls Getriebe zwischen Elektromotor und Propeller 20) können mehrere effizienzsteigernde Effekte erzielt werden.
1. Die Ausbalancierung des Flugzeugs ist einfacher, da die Schuberzeugungseinheit 12 und die Energieerzeugungseinheit 16 auf gegenüberliegenden Seiten des Gesamtschwerpunkts des Flugzeugs angeordnet sein können. Dies gibt mehr Freiheitsgrade bei der Anordnung und den Proportionen der einzelnen Flugzeugteile (Spitze, Rumpf, Heck, Tragflächen, Leitwerk). Indem beispielsweise nicht der Verbrennungsmotor 24 und der Propeller 20 zusammen in der Spitze des Flugzeugrumpfes im Bug angeordnet sein müssen, muss auch das Heck nicht als Gegengewicht entsprechend lang ausgebildet sein, um diese Buglastigkeit auszugleichen. Ein kürzeres Flugzeug kann dann auch kürzere Flügel aufweisen, sodass sich insgesamt eine Verbesserung des Auftriebs und des Vortriebs aufgrund eines geringeren Luftwiderstands ergibt. Eine besondere Ausführungsform des erfindungsgemäßen Flugzeugs sieht auch die Ausgestaltung als Nur-Flügel-Flugzeug vor, in welchem dann ebenfalls die beschriebenen Antriebskomponenten einfacher verteilt werden können, als es bei einem Luftfahrzeugantrieb mit mechanisch Kopplung von Verbrennungsmotor und Propeller der Fall wäre.
2. Eine Anordnung der Schuberzeuger (Propeller 20 und gegebenenfalls weiterer Propeller) in Bereichen des Flugzeugs, denen die Aerodynamik des Gesamtsystems des Flugzeugs möglichst wenig gestört wird, wird ermöglicht. So stört beispielsweise ein Propeller an einer Tragfläche die den Auftrieb erzeugende Strömung der Tragfläche und reduziert deshalb den gewünschten Auftrieb. Ein Propeller ist in der Regel an der Tragfläche angeordnet, da diese einen statisch günstigen Ort zum Tragen einer Verbrennungskraftmaschine bildet. Bei dem erfindungsgemäßen Flugzeug fällt diese Randbedingung weg, da die Verbrennungskraftmaschine 34 in einem größeren Abstand A vom Propeller 20 im Flugzeug F angeordnet sein kann. Die Schuberzeugungseinheit 12 lässt sich konstruktiv sehr viel einfacher am Flugzeug anbringen als eine Kombination aus einer Verbrennungskraftmaschine und einem Propeller. So kann die Schuberzeugungseinheit 12 beispielsweise auf einem Stab auf dem Dach des Flugzeuges in einer Entfernung von beispielsweise 1,5 m oder 2 m angeordnet sein oder auch zwischen den Flügeln und dem Leitwerk. Hierdurch lässt sich eine Verbesserung des Auftriebs im Vergleich zu einem herkömmlichen Flugzeug erzielen.
3. Eine Verbesserung des Vortriebs kann durch eine Anordnung der Schuberzeuger in Bereichen des Flugzeugs erzielt werden, in denen eine ungestörte An- und Abströmung der Luft möglich ist. Dies sind ebenfalls die bereits beschriebenen Orte auf einer Stange oder z. B. am Rumpf hinter den Tragflächen und vor dem Leitwerk, wenn als Grundform des Flugzeugrumpfes die herkömmliche Form aus zylinderförmigem Flugzeugrumpf mit mittig angeordneten Starrflügel und Heckleitwerk zugrunde gelegt wird (vergleiche FIG 2). Diese Anordnung ermöglicht eine Verbesserung des Vortriebs durch einen verringerten Strömungswiderstand.

Insgesamt ist durch das Beispiel gezeigt, wie durch eine räumliche Aufteilung der Antriebskomponenten in vorteilhafter Weise der Auf- und Vortrieb eines Flugzeugs verbessert werden kann und es dadurch schneller und/oder im Kraftstoffverbrauch effizienter gemacht werden kann. Des Weiteren besteht durch die Aufteilung die Möglichkeit der Reduzierung einer Lärmbelastung am Boden durch die freie Ausrichtbarkeit des Verbrennungsmotors im Flugzeug.

## Patentansprüche

1. Flugzeug (F), wobei das Flugzeug (F) ein motorbetriebenes Starrflügelflugzeug ist, mit
- einer Schuberzeugungseinheit (12), die einen Elektromotor (24) und einen mit diesem über eine Welle (22) gekoppelten Propeller (20) umfasst,
- einer Energieerzeugungseinheit (14), die eine Verbrennungskraftmaschine (34) und einen mit dieser über eine Welle gekoppelten elektrischen Generator (30) umfasst, und
- einer elektrischen Übertragungseinrichtung (16), die zum Übertragen von elektrischer Energie von der Energieerzeugungseinheit (14) zu der Schuberzeugungseinheit (12) ausgebildet ist, wobei ein Abstand (A) zwischen der Schuberzeugungseinheit (12) und der Energieerzeugungseinheit (14) mindestens 0,5 m beträgt, wobei
- eine maximal mögliche Leistungsabgabe der Verbrennungskraftmaschine (34) kleiner als die bei einem Start des Flugzeugs (F) benötigte Schubleistung ist und
- ein verbrauchsoptimierter Betrieb der Verbrennungskraftmaschine (34) bei einer Leistungsabgabe der Verbrennungskraftmaschine (34) in einem Bereich von 100 % bis 130 % der bestimmungsgemäßen Reiseleistung des Flugzeugs (F) liegt und
- zumindest eine weitere Energieversorgungseinrichtung (18) zum Versorgen der Schuberzeugungseinrichtung (12) mit zusätzlicher elektrischer Energie bereitgestellt ist, wobei die zumindest eine weitere Energieversorgungseinrichtung (18) eine Batterie oder eine Brennstoffzelle umfasst, und das Flugzeug dazu ausgelegt ist, die Energieerzeugungseinheit (14) beim Start des Flugzeugs (F) zu unterstützen, um die beim Start benötigte Schubleistung bereitzustellen,
**gekennzeichnet durch**
eine Schallleiteinrichtung zum Abstrahlen eines von der Energieerzeugungseinheit (14) erzeugten Schalls nach oben (50) von Flugzeug (F) weg, wobei die Schallleiteinrichtung einen Kanal zum Leiten des Schalls nach oben hin umfasst, und **dadurch**, dass eine Rotationsachse der Welle der Energieerzeugungseinheit (14) quer zu einer bestimmungsgemäßen Flugrichtung (42) des Flugzeugs (F) angeordnet ist.

2. Flugzeug (F) nach Anspruch 1, **dadurch gekennzeichnet, dass** ein Gesamtschwerpunkt (S) des Flugzeugs (F) zwischen einem Schwerpunkt der Energieerzeugungseinheit (14) und einem Schwerpunkt der Schuberzeugungseinheit (12) angeordnet ist.

3. Flugzeug (F) nach Anspruch 1 oder 2, **dadurch gekennzeichnet, dass** die Übertragungseinrichtung (16) einen Zwischenkreis umfasst, an welchen der Generator (30) über einen Gleichrichter (32) gekoppelt ist.

4. Flugzeug (F) nach einem der vorhergehenden Ansprüche, **dadurch gekennzeichnet, dass** ein Umrichter (26) zum Betreiben des Elektromotors (24) im Flugzeugrumpf (40) angeordnet ist.

5. Flugzeug (F) nach einem der vorhergehenden Ansprüche, **dadurch gekennzeichnet, dass** die Schuberzeugungseinheit (12) zwischen Tragflächen (44) und Leitwerk (48) angeordnet ist.

6. Flugzeug (F) nach einem der vorhergehenden Ansprüche, **gekennzeichnet durch** eine weitere Schuberzeugungseinheit, die ebenfalls über die Übertragungseinrichtung (16) elektrisch mit der Energieerzeugungseinheit (14) gekoppelt ist.

7. Flugzeug (F) nach einem der vorhergehenden Ansprüche, **dadurch gekennzeichnet, dass** der Propeller (20) ein freifahrender Propeller oder ein Mantelpropeller ist.

8. Flugzeug nach einem der vorhergehenden Ansprüche, **dadurch gekennzeichnet, dass** bei der Schuberzeugungseinheit (12) der Elektromotor über ein Getriebe mit dem Propeller (20) gekoppelt ist und/oder bei der Energieerzeugungseinheit (14) die Verbrennungskraftmaschine (34) über ein Getriebe mit dem elektrischen Generator (30) gekoppelt ist.

## Claims

1. Aircraft (F), wherein the aircraft (F) is a motor-driven, fixed-wing aircraft, with
- a thrust creation unit (12), which comprises an electric motor (24) and a propeller (20) coupled to said motor via a shaft (22),
- an energy generation unit (14), which comprises an internal combustion engine (34) and an electric generator (30) coupled to said engine via a shaft, and
- an electric transmission device (16), which is embodied for transmission of electric energy from the energy generation unit (14) to the thrust creation unit (12), wherein a distance (A) between the thrust creation unit (12) and the energy generation unit (14) amounts to at least 0.5 m, wherein
- a maximum possible power output of the internal combustion engine (34) is less than the thrust power needed during a take-off of the aircraft (F) and
- a consumption-optimised operation of the internal combustion engine (34) lies at a power output of the internal combustion engine (34) in a range of 100% to 130% of the specified cruising power of the aircraft (F) and
- at least one further energy supply device (18) for supplying the thrust creation device (12) with additional electric energy is provided, wherein the at least one further energy supply device (18) comprises a battery or a fuel cell, and the aircraft is designed to assist the energy generation unit (14) during takeoff of the aircraft (F) in order to provide the thrust needed during takeoff.
**characterised by**
a sound conducting device for emitting sound created by the energy generation unit (14) upwards (50) away from the aircraft (F), wherein the sound conducting device includes a channel for directing the sound upwards, and by an axis of rotation of the shaft of the energy generation unit (14) being arranged transverse to a specified flight direction (42) of the aircraft (F).

2. Aircraft (F) according to claim 1, **characterised in that** an overall centre of gravity (S) of the aircraft (F) is arranged between a centre of gravity of the energy generation unit (14) and a centre of gravity of the thrust creation unit (12).

3. Aircraft (F) according to claim 1 or 2, **characterised in that** the transmission device (16) includes a DC link circuit to which the generator (30) is coupled via a rectifier (32).

4. Aircraft (F) according to one of the preceding claims, **characterised in that** a converter (26) for operating the electric motor (24) is arranged in the aircraft fuselage (40).

5. Aircraft (F) according to one of the preceding claims, **characterised in that** the thrust creation unit (12) is arranged between wings (44) and tailplane assembly (48).

6. Aircraft (F) according to one of the preceding claims, **characterised by** a further thrust creation unit, which is likewise coupled electrically via the transmission device (16) to the energy generation unit (14).

7. Aircraft (F) according to one of the preceding claims **characterised in that** the propeller (20) is a free-running propeller or a ducted propeller.

8. Aircraft (F) according to one of the preceding claims **characterised in that** in the thrust creation unit (12) the electric motor is coupled via gearing to the propeller (20) and/or in the energy generation unit (14) the internal combustion engine (34) is coupled via gearing to the electric generator (30).

## Revendications

1. Avion (F), dans lequel l'avion (F) est un avion à voilure fixe motorisé, avec
- une unité de génération de poussée (12), qui comprend un moteur électrique (24) et une hélice (20) couplée à celui-ci via un arbre (22),
- une unité de génération d'énergie (14), qui comprend un moteur à combustion interne (34) et un générateur électrique (30) couplé à celui-ci via un arbre, et
- un dispositif de transfert électrique (16), qui est configuré pour le transfert de l'énergie électrique de l'unité de génération d'énergie (14) à l'unité de génération de poussée (12), dans lequel un espacement (A) entre l'unité de génération de poussée (12) et l'unité de génération d'énergie (14) mesure au moins 0,5 m, dans lequel
- une puissance débitée possible maximale du moteur à combustion interne (34) est plus petite que la puissance de poussée nécessaire lors du démarrage de l'avion (F) et
- un fonctionnement du moteur à combustion interne (34) optimisé en termes de consommation pour une puissance débitée du moteur à combustion interne (34) se situe dans une plage de 100 % à 130 % de la puissance de déplacement conforme de l'avion (F) et
- au moins un autre dispositif d'alimentation en énergie (18) est mis à disposition pour l'alimentation du dispositif de génération de poussée (12) avec une énergie électrique supplémentaire, dans lequel l'au moins un autre dispositif d'alimentation en énergie (18) comprend une batterie ou une pile à combustible, et l'avion est conçu pour soutenir l'unité de génération d'énergie (14) lors du démarrage de l'avion (F), afin de mettre à disposition la puissance de poussée nécessaire lors du démarrage,
**caractérisé par**
un dispositif de guidage du son pour l'émission d'un son généré par l'unité de génération d'énergie (14) vers le haut (50) s'éloignant de l'avion (F), dans lequel le dispositif de guidage du son comprend un canal pour le guidage du son vers le haut, et en ce qu'un axe de rotation de l'arbre du dispositif de génération d'énergie (14) est agencé transversalement par rapport à une direction de vol conforme (42) de l'avion (F).

2. Avion (F) selon la revendication 1, **caractérisé en ce qu'**un centre de gravité global (S) de l'avion (F) est agencé entre un centre de gravité de l'unité de génération d'énergie (14) et un centre de gravité de l'unité de génération de poussée (12).

3. Avion (F) selon la revendication 1 ou 2, **caractérisé en ce que** le dispositif de transfert (16) comprend un circuit intermédiaire, auquel est couplé le générateur (30) via un redresseur (32).

4. Avion (F) selon l'une des revendications précédentes, **caractérisé en ce qu'**un survolteur (26) est agencé pour le fonctionnement du moteur électrique (24) dans le fuselage de l'avion (40).

5. Avion (F) selon l'une des revendications précédentes, **caractérisé en ce que** l'unité de génération de poussée (12) est agencée entre des surfaces portantes (44) et un empennage (48).

6. Avion (F) selon l'une des revendications précédentes, **caractérisé par** une autre unité de génération de poussée, qui est également couplée électriquement à l'unité de génération d'énergie (14) via le dispositif de transfert (16).

7. Avion (F) selon l'une des revendications précédentes, **caractérisé en ce que** l'hélice (20) est une hélice autonome ou une hélice carénée.

8. Avion selon l'une des revendications précédentes, **caractérisé en ce que** dans le cas de l'unité de génération de poussée (12) le moteur électrique est couplé à l'hélice (20) via un mécanisme d'entraînement et/ou dans le cas de l'unité de génération d'énergie (14) le moteur à combustion interne (34) est couplé au générateur électrique (30) via un mécanisme d'entraînement.
